# EUROPEAN PATENT SPECIFICATION

(11) **EP 3 804 874 B1**
(45) Date of publication and mention of the grant of the patent: **31.08.2022**
(21) Application number: 19824983.1
(22) Date of filing: 14.01.2019
(51) Int. Cl.: B21C 37/02, B22D 11/041, B22D 11/00, B22D 11/04, B22D 11/10, B22D 11/103, B22D 11/12, B22D 11/22, B21B 1/46

(54) **METAL COMPOUND PLATE STRIP CONTINUOUS PRODUCTION EQUIPMENT AND METHOD**
VORRICHTUNG UND VERFAHREN ZUR KONTINUIERLICHEN HERSTELLUNG VON METALLVERBUNDPLATTENSTREIFEN
ÉQUIPEMENT ET PROCÉDÉ DE PRODUCTION EN CONTINU DE BANDES DE PLAQUES COMPOSITES MÉTALLIQUES

(30) Priority: 29.06.2018 CN 201810702004
(43) Date of publication of application: 14.04.2021
(73) Proprietor: Baoshan Iron & Steel Co., Ltd., Shanghai 201900 (CN)
(72) Inventor: ZHANG, Qingfeng, Shanghai 201900 (CN); JIAO, Sihai, Shanghai 201900 (CN)
(74) Representative: Maiwald Patent- und Rechtsanwaltsgesellschaft mbH
(86) International application number: PCT/CN2019/071594
(87) International publication number: WO 2020/001005

(56) References cited:
- EP-A1- 3 027 330
- EP-A1- 3 027 330
- CN-A- 1 836 800
- CN-A- 101 780 532
- CN-A- 103 495 618
- CN-A- 104 148 598
- CN-A- 105 215 307
- CN-A- 105 290 352
- CN-U- 206 632 325
- JP-A- S6 149 749
- JP-A- S61 115 651
- JP-A- S61 195 741

## Description

### Technical field

The invention relates to steel metallurgical production, in particular to a device and method for manufacturing metal clad strips continuously, which can be used to produce metal clad strips with different materials component.

### Background arts

With the development of modern technology and national economy, customers have stricter requirements on the performance of materials. Since a single metal material can hardly satisfy the requirements for multiple performance in practical use, metal composite material that can provide both functional and structural performance arises, which plays an important role in meeting the customization and becomes more and more widely known and used by the customers. Some common methods and devices for manufacturing a metal clad strip are listed as below:
1. Explosive cladding: Clean up the contact surfaces of two different metal materials and add explosive into the interface between them. Though the instant high temperature caused by explosion is used to weld them together, lead to an insufficiently compound and low strength of the clad strips, which is only suitable for single sheet and small batch production;
2. Roll-bonded cladding: Clean up the surface of stainless steel and carbon steel for compounding, align them, and vacuumize the surrounding area and weld, then heat and roll to complete compound, which can achieve sufficient compound and high strength, but lead to low productivity, only suitable for single sheet and small batch production;
3. Centrifugal casted cladding: Feed the molten carbon steel and the molten stainless steel into the centrifuge sequentially. The molten carbon steel and the molten stainless steel are solidified successively to form annular clad plates and pipes which are then straightened, heated, rolled and their like.

At present, the ideal clad process is Roll-bonded cladding, the clad strip produced by which realizes complete metallurgical bonding at the interface, which has high bonding strength, and excellent product performance, but also causes the low efficiency of billet assembly which includes multiple processes, and difficult to realize continuously, automate and large-scale production, that increase the cost. In recent years, some processes and methods for manufacturing clad strips continuously have emerged, such as continuous casting and rolling, thin-strip continuous casting, etc. For example, CN1714957A discloses a method and equipment for manufacturing clad plates or strips for different metal materials, using 2~3 molds for molten carbon steel and molten stainless steel on a one continuous casting machine, to realize the continuous casting and rolling of single-sided or double-sided clad plates and strips, wherein the mold is composed of four synchronous moving steel strips respectively located at the top, bottom, left and right side of the mold, which change the former mold. The base layer metal and the clad layer metal all formed by solidification of the molten metal in the mold.

CN101780532A discloses a method for continuous casting of a molten-phase clad slab, which injecting the molten metal of base layer and the clad layer into a molten pool of roll mold formed by mold rolls and side seal plates, wherein the molten pool is divided into base layer cavity and clad layer cavity, and the clad strips is formed after Straightening and sizing of the strip formed in the mold. The disadvantage of this method is that both base layer and clad layer are form by the solidification of molten steel at the same time, which is difficult to control the clad interface, and not only need to keep two types of molten steel from mixing, but also need to ensure two materials will not be too cold to result in failure clad.

CN104249135A discloses a method for manufacturing the clad strips by double-roll thin strips, which feeding the intermediate strip to the molten pool of continuous casting double-roll thin strips, to solidify the molten metal rapidly under the cooling effect of both mold roll and intermediate strip, then form the single-sided or double-sided clad plates and strips. Similarly, CN103495618A discloses a device and method for manufacturing metal clad plates by casting and rolling, in which the method is to feed base material to be clad to the molten pool of a thin strip continuous casting machine, wherein the molten metal to be clad in the molten pool is solidified on the surface of the base material, and then the secondary cooling, leveling and rolling is carried out after the strip exiting the mold to form the clad strips. These two methods above are all based on thin strip continuous casting technique, the products prepared by which are mainly in specifications of thin strips, and the thickness of the solidified clad layer is limited, are not suitable for preparing thick clad layers strips.

CN102039309A discloses a method for continuous casting and rolling thin strip by composite-structure of double-roll and double-strip, in which two metal base material strips surround the mold roll to form a molten pool where the molten metal solidified and formed into a clad casting strip with the two metal base material strips, which is rolled by rolling mill to form a clad thin strip. The clad metal layer in this method is steel strips, and the base layer is solidified by molten steel.

CN105215307A discloses a process and equipment for manufacturing double-layer clad plates, the method of which is solidifying the different materials successively by using two tundishes and two molds. The casting slab solidified in the first mold enters the second mold, so that the second material can be adhere to the surface of the casting slab for solidification. Then, a single-sided clad plate is formed after secondary cooling, rolling and other procedure.

CN1141962A discloses a method for manufacturing clad strips continuously by reversalfixation, in which the base material strip is decoiled, descaled and passivized, and preheated at a temperature range from 200 °C to 1000 °C, then enters the mold pool to clad continuously with the molten metal in the pool. CN 105 290 352 A discloses a solid-liquid cast-rolling compounding device for producing a reticular reinforcement interlayer composite material. The solid-liquid cast-rolling compounding device comprises an uncoiler, a steering roll, a molten metal pouring device and a cast-rolling machine. JP S61 115651 A discloses a method and devce for continuously casting of metal, to cast easily a clad material having a large thickness with a strip as a core metal by introducing the strip to the confluent point of the molten metals poured from two directions thereby forming the clad. D3-D5 are known prior art in the technical field.

The patents mentioned above are new techniques developed to improve the productivity of clad plates and realize continuous production, which also have some disadvantages respectively.

### Summary of the invention

The present invention provides a device and method for manufacturing metal clad strips continuously, which improve the productivity of clad strips and reduce the manufacturing costs.

A device and method for manufacturing metal clad strips continuously according to the present invention, the device and specific steps are as follows:
A device for manufacturing metal clad strips continuously, comprising base material supplying equipment consisting of decoiler, pinch roll, shot blasting machine, welding equipment, welding pinch roll, induction heating apparatus, and guiding roll, wherein,
base material strip are transported by the base material supplying equipment through decoiler, pinch roll, shot blasting machine, welding equipment adapted to weld shot-blasted base material strips head-to-tail, welding pinch roll, induction heating apparatus and guiding roll to the mold where the base material and molten steel are merged; the base material strip enters the mold along the middle inside from above, and pass through the mold from below, wherein the two inner walls of the mold being sealed with side seal plates; two tundishes for casting molten steel is provided above the mold; the molten steel flows from tundish into the mold and contact with the two sides of the base material strip in the mold, so that a preliminary melt merging takes place;
upon preliminary melt merging, the base material strip forms a clad slab which passes through the mold from below, and cooled at a secondary cooling section by cooling-spray located at the outlet of the lower part of the mold; a leveling roll is provided after the secondary cooling section, and a rolling mill is provided after the leveling roll for rolling the clad slabs into clad strips into different size and specification; an on-line cooling equipment for the clad strips is provided after the rolling mill, a straightening machine is provided at the exit of the on-line cooling equipment; the straightened clad strip is then cut to fixed length by a dividing shear or is coiled by a coiler.

A method for manufacturing metal clad plates in way of continuously by using the said device for manufacturing metal clad strips continuously, comprising the following steps:
1) decoiling base material strip having a thickness of 2-20mm with decoiler, while sending base material strip having a thickness of 21~100mm directly to the shot blasting machine through pinch roll for surface cleaning; then welding the shot-blasted base material strips head-to-tail by welding equipment so as to supply the base material strips continuously;
2) sending the welded base material strips through welding pinch roll to induction heating apparatus for heating, wherein the induction heating apparatus is filled with nitrogen or argon protection atmosphere, the heating temperature ranges from 100°C to 1200°C, the heating rate ranges from 1 ~ 50°C/s depending on the thickness of the strip; the base material strips is selected from carbon steel, stainless steel, special alloy steel, titanium, copper and the like, the heating makes easier merging in the subsequent step of the base material strip and the molten clad layer, and accelerates melting of surface metal of base material strip;
3) sending the heated base material strips to mold through guiding roll, where the base material strips enters the mold along the middle inside from above and pass through the mold from below at a rate of 0.1 ~ 30m/min; meanwhile, infusing one or two kind of molten clad melt in the tundish into the mold with argon blowing on the mold surface to prevent the molten clad melt from oxidation; the temperature of the molten clad melt is 30 - 150°C higher than the melting point of the base material strips, and the molten clad melt is selected from carbon steel, stainless steel, special alloy steel, titanium, and copper; the molten clad melt having high temperature contacts the surface of the base material strip having low temperature, leading to slightly melt on the surface of the base material strip, and the molten clad melt is solidified on the surface of the base material strip having low temperature, so as to achieve a melting clad; with the molten clad melt being gradually solidified under the effect of the base material strip having low temperature and the copper plate of the mold, a clad slab is formed, wherein a single-sided clad slab can be formed by one tundish, and a double-sided clad slab can be formed by two tundishes;
4) the clad slab formed from the mold the passes through the mold from below and enters into secondary cooling section, where cooling water is sprayed on the upper and lower surfaces of the clad slab to further solidify the incompletely solidified composite slab, meanwhile the rapid cooling prevents the grains generated by surface solidification from growing and coarsening ;
5) the clad slab after cooling is leveled by leveling roll and forwarded into rolling mill to be rolled into clad strip having different thickness ranging from 0.5mm to 100mm, where the clad interface of the clad strip is further compressed and deformed at high temperature during the rolling process, the microstructure of the clad interface structure recovers and recrystallizes, and recombination of the interface was promoted by grain growth and element diffusion under high temperature;
6) clad strip after rolling is on-line cooled by on-line cooling equipment according to the desired product performance, wherein the on-line cooling rate ranges from 1°C/s to 60°C/s, and the finish cooling temperature ranges from 50°C to 600°C depending on the thickness of the product;
7) the clad strip after above cooling is transported to straightening machine for straightening, which then cut in fixed length by dividing shear or coiled by a coiler.

The device and method for manufacturing metal clad strips continuously according to the present invention can produce the following effects:
1) The device and method for manufacturing metal clad strips continuously provided by the present invention, combines the continuous casting, rolling and heat treatment methods used for single material production with the continuous and large-scale production method used for clad strips, greatly improves the productivity of composite plates and strips;
2) The device and method for manufacturing metal clad strips continuously provided by the present invention, can be used to manufacture single-sided or double-sided clad strips of plates with different thickness specifications, wherein the base material or the clad material can be selected in a wide range, including carbon steel, stainless steel, special alloy steel, titanium, copper and the like;
3) The device and method for manufacturing metal clad strips continuously provided by the present invention, realizes continuous casting and rolling for clad strips and plates, and reduces energy consumption and costs.

### Figure description

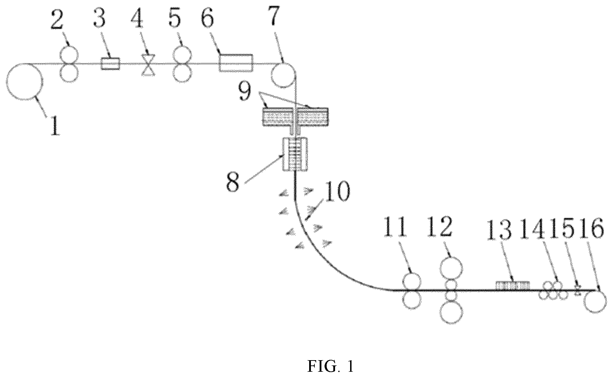

Fig. 1 shows a schematic diagram of the device and method for manufacturing metal continuously according to the present invention, in which:
1-decoiler, 2-pinch roll, 3-shot blasting machine, 4-welding equipment, 5-welding pinch roll, 6-induction heating apparatus, 7-guiding roll, 8-mold, 9-tundish, 10-secondary cooling section, 11-leveling roll, 12-rolling mill, 13- on-line cooling equipment, 14-straightening machine, 15-dividing shear, 16-coiler, A-base material strip, B-clad slab, C-clad strip.

### Detailed Description of the Embodiments

In the following, a device and method for manufacturing metal clad strips continuously provided by the present invention will be further described with reference to the drawings and embodiments.

### Example1: Double-sided clad strips

1) Decoiling Q345B having a thickness of 20mm with decoiler and sending it to shot blasting machine through pinch roll for surface cleaning, then welding the tail of shot-blasted strip to the head of the next shot-blasted strip by welding equipment so as to supply Q345B continuously;
2) The welded Q345B is transported through welding pinch roll to induction heating apparatus to be heated, wherein the induction heating apparatus is filled with nitrogen for protection, the heating temperature is 850°C, the heating speed is 10°C/s;
3) The heated Q345B passes through the mold along the middle inside of the mold at a speed of 3m/min, and infusing the molten clad melt of 316L stainless steel in the two tundishes (9) into the mold with argon blowing on the mold surface to prevent the molten clad melt from oxidation, wherein the pouring temperature is 1550°C. The molten clad melt of 316L contacts the surface of the Q345B which surface is slightly melt, so as to achieve the primary melting clad of the clad layer and the base layer, and finally form a double-sided clad slab with a base layer of Q345B and clad layers of 316L, which has a thickness of 5+20+5mm.
4) The double-sided clad slab formed in the mold passes through the mold and enters into secondary cooling section, where cooling water is sprayed on the upper and lower surfaces of the clad slab to further solidify the incompletely solidified clad material, meanwhile rapid cooling prevents the grains generated by surface solidification from growing and coarsening;
5) The cooled clad slab is transported to rolling mill at 1120°C to be rolled into a double-sided clad strip with a thickness of 6mm(1+4+1mm), and the final rolling temperature is 1000°C. The rolled clad strip is cooled on-line, wherein the start cooling temperature is 950°C, the final cooling temperature is 540°C, and the cooling rate is 35°C/s;
6) The cooled clad strip is transported to straightening machine for straightening, and the straightened clad strip is coiled on-line by a coiler.

### Example2: Single-sided clad strips

1) Decoiling AH36 carbon steel having a thickness of 40mm with decoiler and sending it to shot blasting machine through pinch roll for surface cleaning, then welding the tail of shot-blasted strip to the head of the next shot-blasted strip by welding equipment so as to supply AH36 continuously;
2) The welded carbon steel is transported through welding pinch roll to induction heating apparatus to be heated, wherein the induction heating apparatus is filled with nitrogen for protection, the heating temperature is 900°C, the heating speed is 15°C/s;
3) The heated carbon steel passes through the mold along the middle inside of the mold at a speed of 1.8m/min, and infusing the molten clad melt of 304L stainless steel in one of the tundishes into the mold with argon blowing on the mold surface to prevent the molten clad melt from oxidation, wherein the pouring temperature is 1580°C. The molten clad melt of 304L contacts the surface of the carbon steel which surface is slightly melt, so as to achieve the primary melting clad of the clad layer and the base layer, and finally form a single-sided clad slab with a base layer of AH36 carbon steel and clad layer of 304L, which has a thickness of 40+8mm.
4) The single-sided clad slab formed in the mold passes through the mold and enters into secondary cooling section, where cooling water is sprayed on the upper and lower surfaces of the clad slab to further solidify the incompletely solidified clad material, meanwhile rapid cooling prevents the grains generated by surface solidification from growing and coarsening;
5) The cooled clad slab is transported to rolling mill at 1150°C to be rolled into a single-sided clad strip with a thickness of 6mm(5+1mm), and the final rolling temperature is 970°C. The rolled clad strip is cooled on-line, wherein the start cooling temperature is 910 °C, the final cooling temperature is 420°C, and the cooling rate is 40°C/s;
6) The cooled clad strip is transported to straightening machine for straightening, and the straightened clad strip is coiled on-line by a coiler.

The device and method for manufacturing metal clad strips continuously casting and rolling provided by the present invention, combines the continuous casting, rolling and heat treatment methods used for single material manufacture with the continuous and large-scale manufacture method of clad strip, greatly improves the productivity of clad strips and plates. The present invention can be used for manufacturing single-sided or double-sided clad plates and strips with different thickness specifications, wherein the base layer material or the clad material can be selected in a wide range, including carbon steel, stainless steel, special alloy steel, titanium, copper and the like. In the present application, continuous casting and rolling clad strip is implemented, which decrease the energy consumption and costs.

## Claims

1. A device for manufacturing metal clad strips continuously, comprising base material supplying equipment consisting of decoiler (1), pinch roll (2), shot blasting machine (3), welding equipment (4), welding pinch roll (5), induction heating apparatus (6), and guiding roll (7), wherein,
base material strip (A) are transported by the base material supplying equipment through decoiler (1), pinch roll (2), shot blasting machine (3), welding equipment (4) adapted to weld shot-blasted base material strips head-to-tail, welding pinch roll (5), induction heating apparatus (6) and guiding roll (7) to the mold (8) where the base material and molten steel are merged; the base material strip enters the mold along the middle inside from above, and pass through the mold from below, wherein the two inner walls of the mold being sealed with side seal plates; two tundishes (9) for casting molten steel is provided above the mold; the molten steel flows from tundish into the mold and contact with the two sides of the base material strip in the mold, so that a preliminary melt merging takes place;
upon preliminary melt merging, the base material strip (A) forms a clad slab (B) which passes through the mold from below, and cooled at a secondary cooling section (10) by cooling-spray located at the outlet of the lower part of the mold; a leveling roll (11) is provided after the secondary cooling section, and a rolling mill (12) is provided after the leveling roll for rolling the clad slabs into clad strips (C) into different size and specification; an on-line cooling equipment (13) for the clad strips is provided after the rolling mill, a straightening machine (14) is provided at the exit of the on-line cooling equipment; the straightened clad strip is then cut to fixed length by a dividing shear (15) or is coiled by a coiler (16).

2. A method for manufacturing metal clad strips continuously by using the device for manufacturing metal clad strips continuously according to claim1, comprising the following steps:
1) decoiling base material strip (A) having a thickness of 2~20mm with decoiler (1), while sending base material strip having a thickness of 21~100mm directly to the shot blasting machine (3) through pinch roll (2) for surface cleaning; then welding the shot-blasted base material strips head-to-tail by welding equipment (4) so as to supply the base material strips continuously;
2) sending the welded base material strips through welding pinch roll (5) to induction heating apparatus (6) for heating, wherein the induction heating apparatus is filled with nitrogen or argon protection atmosphere, the heating temperature ranges from 100°C to 1200°C, the heating rate ranges from 1∼50°C/s depending on the thickness of the strip; the base material strips is selected from carbon steel, stainless steel, special alloy steel, titanium, copper and the like, the heating makes easier merging in the subsequent step of the base material strip and the molten clad layer, and accelerates melting of surface metal of base material strip;
3) sending the heated base material strips to mold (8) through guiding roll (7), where the base material strips enters the mold along the middle inside from above and pass through the mold from below at a rate of 0.1∼30m/min; meanwhile, infusing one or two kind of molten clad melt in the tundish (9) into the mold with argon blowing on the mold surface to prevent the molten clad melt from oxidation; the temperature of the molten clad melt is 30∼150°C higher than the melting point of the base material strips, and the molten clad melt is selected from carbon steel, stainless steel, special alloy steel, titanium, and copper; the molten clad melt having high temperature contacts the surface of the base material strip having low temperature, leading to slightly melt on the surface of the base material strip, and the molten clad melt is solidified on the surface of the base material strip having low temperature, so as to achieve a melting clad; with the molten clad melt being gradually solidified under the effect of the base material strip having low temperature and the copper plate of the mold, a clad slab (B) is formed, wherein a single-sided clad slab can be formed by one tundish, and a double-sided clad slab can be formed by two tundishes;
4) the clad slab (B) formed in the mold then passes through the mold from below and enters into secondary cooling section (10), where cooling water is sprayed on the upper and lower surfaces of the clad slab to further solidify the incompletely solidified clad slab, meanwhile the rapid cooling prevents the grains generated by surface solidification from growing and coarsening;
5) the clad slab (B) after cooling is leveled by leveling roll (11) and forwarded into rolling mill (12) to be rolled into clad strip (C) having different thickness ranging from 0.5mm to 100mm, where the clad interface of the clad strip is further compressed and deformed at high temperature during the rolling process, the microstructure of the clad interface structure recovers and recrystallizes, and recombination of the interface was promoted by grain growth and element diffusion under high temperature;
6) clad strip (C) after rolling is on-line cooled by on-line cooling equipment (13) according to the desired product performance, wherein the on-line cooling rate ranges from 1°C/s to 60°C/s, and the finish cooling temperature ranges from 50°C to 600°C depending on the thickness of the product;
7) the clad strip (C) after above cooling is transported to straightening machine (14) for straightening, which then cut in fixed length by dividing shear (15) or coiled by a coiler (16).

## Patentansprüche

1. Vorrichtung zur kontinuierlichen Herstellung von Metallverbundplattenbändern, die eine Grundmaterialzuführungsausrüstung umfasst, die aus einer Abwickelhaspel (1), einer Quetschwalze (2), einer Kugelstrahlmaschine (3), einer Schweißausrüstung (4), einer Schweißquetschwalze (5), einer Induktionsheizvorrichtung (6) und einer Führungsrolle (7) besteht, wobei,
Grundmaterialband (A) werden von der Grundmaterialzuführungseinrichtung durch Abwickelhaspel (1), Quetschwalze (2), Kugelstrahlmaschine (3), Schweißeinrichtung (4), die geeignet ist, kugelgestrahlte Grundmaterialbänder Kopf-an-Schwanz zu verschweißen, Schweißquetschwalze (5), Induktionsheizvorrichtung (6) und Führungswalze (7) zur Form (8) transportiert, wo das Grundmaterial und der geschmolzene Stahl zusammengeführt werden; das Grundmaterialband entlang der mittleren Innenseite von oben in die Form eintritt und die Form von unten durchläuft, wobei die beiden Innenwände der Form mit seitlichen Dichtungsplatten abgedichtet sind; zwei Verteiler (9) zum Gießen von geschmolzenem Stahl oberhalb der Form vorgesehen sind; der geschmolzene Stahl von den Verteilern in die Form fließt und mit den beiden Seiten des Grundmaterialbandes in der Form in Kontakt kommt, so dass eine vorläufige Schmelzverschmelzung stattfindet;
nach dem vorläufigen Verschmelzen der Schmelze bildet das Grundmaterialband (A) eine plattierte Bramme (B), die die Form von unten durchläuft und in einem sekundären Kühlabschnitt (10) durch Kühlspray gekühlt wird, das sich am Auslass des unteren Teils der Form befindet; eine Richtwalze (11) ist nach dem sekundären Kühlabschnitt vorgesehen, und ein Walzwerk (12) ist nach der Richtwalze zum Walzen der plattierten Brammen zu plattierten Bändern (C) in verschiedenen Größen und Spezifikationen vorgesehen; nach dem Walzwerk ist eine Online-Kühleinrichtung (13) für die plattierten Bänder vorgesehen, eine Richtmaschine (14) ist am Ausgang der Online-Kühleinrichtung vorgesehen; das gerichtete plattierte Band wird dann durch eine Teilungsschere (15) auf eine feste Länge geschnitten oder durch eine Haspel (16) aufgewickelt.

2. Verfahren zur kontinuierlichen Herstellung von Metallverbundplattenbänder unter Verwendung der Vorrichtung zur kontinuierlichen Herstellung von Metallverbundplattenbändern nach Anspruch 1, umfassend die folgenden Schritte:
1) Abwickeln von Grundmaterialband (A) mit einer Dicke von 2~20mm mit Abwickelhaspel (1), während Grundmaterialband mit einer Dicke von 21~100mm direkt zur Strahlanlage (3) durch Quetschwalze (2) zur Oberflächenreinigung geschickt werden; dann Verschweißen der kugelgestrahlten Grundmaterialbänder Kopf-an-Schwanz durch Schweißausrüstung (4), um die Grundmaterialbänder kontinuierlich zu liefern;
2) Senden der geschweißten Grundmaterialbänder durch die Schweißquetschwalze (5) zur Induktionsheizvorrichtung (6) zum Erwärmen, wobei die Induktionsheizvorrichtung mit einer Stickstoff- oder Argon-Schutzatmosphäre gefüllt ist, die Erwärmungstemperatur im Bereich von 100°C bis 1200°C liegt, die Erwärmungsgeschwindigkeit im Bereich von 1~50°C/s in Abhängigkeit von der Dicke des Bandes liegt; das Grundmaterialband ausgewählt ist aus Kohlenstoffstahl, rostfreiem Stahl, speziallegiertem Stahl, Titan, Kupfer und dergleichen, die Erwärmung erleichtert die Verschmelzung des Grundmaterialbandes und der geschmolzenen Plattierungsschicht in dem nachfolgenden Schritt und beschleunigt das Schmelzen des Oberflächenmetalls des Grundmaterialbandes;
3) Senden der erhitzten Grundmaterialbänder an die Form (8) durch die Führungsrolle (7), wo die Grundmaterialbänder in die Form entlang der mittleren Innenseite von oben eintreten und die Form von unten mit einer Rate von 0,1~30m/min durchlaufen; in der Zwischenzeit werden eine oder zwei Arten von geschmolzener plattierter Schmelze im Verteiler (9) in die Form infundiert, wobei Argon auf die Formoberfläche geblasen wird, um eine Oxidation der geschmolzenen plattierten Schmelze zu verhindern; die Temperatur der geschmolzenen plattierten Schmelze ist 30~150°C höher als der Schmelzpunkt der Grundmaterialbänder, und die geschmolzene plattierte Schmelze wird aus Kohlenstoffstahl, rostfreiem Stahl, speziallegiertem Stahl, Titan und Kupfer ausgewählt; die geschmolzene Plattierungsschmelze, die eine hohe Temperatur hat, die Oberfläche des Grundmaterialbandes, das eine niedrige Temperatur hat, berührt, was zu einem leichten Schmelzen auf der Oberfläche des Grundmaterialbandes führt, und die geschmolzene Plattierungsschmelze auf der Oberfläche des Grundmaterialbandes, das eine niedrige Temperatur hat, verfestigt wird, um eine Schmelzplattierung zu erzielen wobei die geschmolzene Plattierungsschmelze unter der Wirkung des Grundmaterialbandes mit niedriger Temperatur und der Kupferplatte der Form allmählich verfestigt wird, wird eine plattierte Bramme (B) gebildet, wobei eine einseitige plattierte Bramme durch einen Verteiler gebildet werden kann und eine doppelseitige plattierte Bramme durch zwei Verteiler gebildet werden kann;
4) die in der Form geformte plattierte Bramme (B) durchläuft dann die Form von unten und tritt in den sekundären Kühlabschnitt (10) ein, wo Kühlwasser auf die Ober- und Unterseite der plattierten Bramme gesprüht wird, um die unvollständig erstarrte plattierte Bramme weiter zu verfestigen, während die schnelle Abkühlung verhindert, dass die durch die Oberflächenverfestigung entstandenen Körner wachsen und vergröbern;
5) die plattierte Bramme (B) wird nach dem Abkühlen durch eine Nivellierrolle (11) nivelliert und in ein Walzwerk (12) befördert, um zu einem plattierten Band (C) mit einer Dicke von 0,5 mm bis 100 mm gewalzt zu werden, wobei die plattierte Grenzfläche des plattierten Bandes während des Walzprozesses bei hoher Temperatur weiter komprimiert und verformt wird, die Mikrostruktur der plattierten Grenzflächenstruktur sich erholt und rekristallisiert und die Rekombination der Grenzfläche durch Kornwachstum und Elementdiffusion unter hoher Temperatur gefördert wird;
6) plattiertes Band (C) nach dem Walzen durch eine Online-Kühleinrichtung (13) entsprechend der gewünschten Produktleistung gekühlt wird, wobei die Online-Kühlrate im Bereich von 1°C/s bis 60°C/s und die Endkühltemperatur im Bereich von 50°C bis 600°C in Abhängigkeit von der Dicke des Produkts liegt;
7) das plattierte Band (C) wird nach der oben genannten Abkühlung zur Richtmaschine (14) transportiert, um es auszurichten, und dann mit einer Teilungsschere (15) auf eine bestimmte Länge geschnitten oder mit einer Haspel (16) aufgewickelt.

## Revendications

1. Dispositif pour fabriquer en continu des bandes à placage métallique, comprenant un équipement de fourniture de matériau de base consistant en une dérouleuse (1), un rouleau pinceur (2), grenailleuse (3), un équipement de soudage (4), un rouleau pinceur de soudage (5), un appareil de chauffage par induction (6), et un rouleau de guidage (7), dans lequel
une bande de matériau de base (A) est transportée par l'équipement de fourniture de matériau de base à travers la dérouleuse (1), le rouleau pinceur (2), la grenailleuse (3), l'équipement de soudage (4) adapté pour souder des bandes de matériau de base grenaillées en tête à queue, le rouleau pinceur de soudage (5), l'appareil de chauffage par induction (6) et le rouleau de guidage (7) jusqu'au moule (8) où le matériau de base et de l'acier fondu sont fusionnés ; la bande de matériau de base entre dans le moule le long du centre à l'intérieur depuis le dessus, et traverse le moule depuis le dessous, dans lequel les deux parois intérieures du moule sont scellées avec des plaques de scellement latérales ; deux entonnoirs (9) pour couler l'acier fondu sont disposés au-dessus du moule ; l'acier fondu s'écoule depuis l'entonnoir dans le moule et vient au contact des deux côtés de la bande de matériau de base dans le moule, si bien qu'une fusion fondue préliminaire a lieu ;
suite à la fusion fondue préliminaire, la bande de matériau de base (A) forme une brame plaquée (B) qui traverse le moule depuis le dessous, et refroidie au niveau d'une section de refroidissement secondaire (10) par un spray refroidisseur situé à la sortie de la partie inférieure du moule ; un rouleau de nivèlement (11) est disposé après la section de refroidissement secondaire, et un laminoir (12) est disposé après le rouleau de nivèlement pour laminer les brames plaquées en bandes plaquées (C) de différentes tailles et spécifications ; un équipement de refroidissement en ligne (13) pour les bandes plaquées est disposé après le laminoir, une redresseuse (14) est disposée à la sortie de l'équipement de refroidissement en ligne ; la bande plaquée redressée est ensuite découpée à une longueur fixée par une cisaille de séparation (15) ou est bobinée par une bobineuse (16).

2. Procédé pour fabriquer en continu des bandes à placage métallique par utilisation du dispositif pour fabriquer en continu des bandes à placage métallique selon la revendication 1, comprenant les étapes suivantes :
1) déroulage d'une bande de matériau de base (A) ayant une épaisseur de 2 à 20 mm avec la dérouleuse (1), cependant qu'une bande de matériau de base ayant une épaisseur de 21 à 100 mm est envoyée directement à la grenailleuse (3) par l'intermédiaire du rouleau pinceur (2) pour un nettoyage de surface ; puis soudage des bandes de matériau de base grenaillées en tête à queue par l'équipement de soudage (4) de façon que les bandes de matériau de base soient délivrées en continu ;
2) envoi des bandes de matériau de base soudées à travers le rouleau pinceur de soudage (5) jusqu'à l'appareil de chauffage par induction (6) pour qu'elles soient chauffées, dans lequel l'appareil de chauffage par induction est rempli d'une atmosphère protectrice d'azote ou d'argon, la température de chauffage est dans la plage de 100°C à 1200°C, la vitesse de chauffage est dans la plage de 1 à 50°C/s en fonction de l'épaisseur de la bande ; la bande de matériau de base est choisie parmi un acier au carbone, un acier inoxydable, un acier allié spécial, le titane, le cuivre et analogues, le chauffage facilite la fusion dans l'étape suivante de la bande de matériau de base et de la couche de placage fondue, et accélère la fusion du métal de surface de la bande de matériau de base ;
3) envoi des bandes de matériau de base chauffées dans le moule (8) à travers le rouleau de guidage (7), où les bandes de matériau de base entrent dans le moule le long du centre à l'intérieur depuis le dessus, et traversent le moule depuis le dessous à une vitesse de 0,1 à 30 m/min ; par ailleurs, injection d'un ou deux types de masse fondue de placage dans l'entonnoir (9) dans le moule avec insufflation d'argon sur la surface du moule pour protéger la masse fondue de placage vis-à-vis d'une oxydation ; la température de la masse fondue de placage est supérieure de 30 à 150°C au point de fusion des bandes de matériau de base, et la masse fondue de placage est choisie parmi un acier au carbone, un acier inoxydable, un acier allié spécial, le titane, et le cuivre ; la masse fondue de placage ayant une température élevée vient au contact de la surface de la bande de matériau de base ayant une température basse, ce qui conduit à une légère fonte sur la surface de la bande de matériau de base, et la masse fondue de placage est solidifiée sur la surface de la bande de matériau de base ayant une température basse, de façon à former un placage fondu ; avec la masse fondue de placage qui solidifie progressivement sous l'effet de la bande de matériau de base ayant une température basse et de la plaque de cuivre du moule, il se forme une brame plaquée (B), dans lequel une brame plaquée sur un seul côté peut être formée par un entonnoir unique, et une brame plaquée sur les deux côtés peut être formée par deux entonnoirs ;
4) la brame plaquée (B) formée dans le moule traverse ensuite le moule depuis le dessous et entre dans une section de refroidissement secondaire (10), où de l'eau de refroidissement est pulvérisée sur les surfaces supérieure et inférieure de la brame plaquée pour solidifier davantage la brame plaquée incomplètement solidifiée, par ailleurs le refroidissement rapide empêche les grains générés par la solidification en surface de croître et de grossir ;
5) la brame plaquée (B) après refroidissement est nivelée par le rouleau de nivèlement (11) et acheminée dans le laminoir (12) pour être laminée en des bandes plaquées (C) ayant des épaisseurs différentes dans la plage de 0,5 mm à 100 mm, où l'interface de placage de la bande plaquée est encore comprimée et déformée à une température élevée durant le traitement de laminage, la microstructure de la structure d'interface de placage est rétablie et recristallise,; et une recombinaison de l'interface est favorisée par la croissance des grains et la diffusion d'éléments à une température élevée ;
6) la bande plaquée (C) après laminage est refroidie en ligne par un équipement de refroidissement en ligne (13) en fonction des performances souhaitées du produit, dans lequel la vitesse de refroidissement en ligne est dans la plage de 1°C/s à 60°C/s, et la température de refroidissement finale est dans la plage de 50°C à 600°C en fonction de l'épaisseur du produit ;
7) la bande plaquée (C) après le refroidissement cidessus est transportée dans la redresseuse (14) pour être redressée, et est ensuite coupée à une longueur fixée par la cisaille de séparation (15) ou est bobinée par la bobineuse (16).
